(19) Europäisches Patentamt
European Patent Office
Office européen des brevets

(11) **EP 4 597 026 A1**

(12) **EUROPEAN PATENT APPLICATION**
published in accordance with Art. 153(4) EPC

(43) Date of publication:
06.08.2025 Bulletin 2025/32

(21) Application number: 23872663.2

(22) Date of filing: 27.01.2023

(51) International Patent Classification (IPC):
*G01B 11/24* (2006.01)   *G01B 11/06* (2006.01)
*G01N 21/17* (2006.01)   *G01N 21/64* (2006.01)
*G02B 21/00* (2006.01)

(52) Cooperative Patent Classification (CPC):
G01B 11/06; G01B 11/24; G01N 21/17;
G01N 21/64; G02B 21/00

(86) International application number:
PCT/KR2023/001243

(87) International publication number:
WO 2024/071532 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.09.2022 KR 20220124335

(71) Applicant: Koh Young Technology Inc.
Seoul 08588 (KR)

(72) Inventors:
• CHOI, Hyoung Su
  Seongnam-si Gyeonggi-do 13588 (KR)
• KANG, In Sung
  Daejeon 34091 (KR)
• JEON, Moon Young
  Seongnam-si Gyeonggi-do 13474 (KR)

(74) Representative: Meissner Bolte Partnerschaft
mbB
Patentanwälte Rechtsanwälte
Postfach 86 06 24
81633 München (DE)

(54) **THREE-DIMENSIONAL SHAPE INSPECTION DEVICE AND THREE-DIMENSIONAL SHAPE INSPECTION METHOD**

(57)     A three-dimensional shape inspection device according to an embodiment comprises, a light emitter including a light source and a spatial light modulator configured to modulate light received from the light source, the light emitter being configured to emit multiple light beams having multiple focal points downward onto a surface of a measurement object; an optical system configured to refract respective modulated light beams at different refractive indices for each of multiple wavelengths based on chromatic aberration, thereby forming a measurement section in a vertical direction in which the light refracted for each wavelength is focused; and an image sensor configured to detect color information of light beams that are focused at and reflected from positions corresponding to heights on the surface of the measurement object among the light beams refracted for each of multiple wavelengths, wherein the optical system comprises a focus adjuster configured to change the measurement section by vertically changing positions at which the light beams refracted for each of multiple wavelengths are focused.

FIG. 10

**Description**

TECHNICAL FIELD

The present disclosure relates to a three-dimensional shape inspection device and a three-dimensional shape inspection method.

BACKGROUND

Confocal microscopy or confocal laser scanning microscopy (CLSM) is a type of microscope that removes out-of-focus light using a pinhole. This microscope eliminates optical interference from areas other than the focal point, enabling high resolution and high magnification, and is used in fields such as life sciences, semiconductors, and materials science.

Among confocal microscopes, a chromatic confocal microscope that utilizes chromatic aberration to perform a 3D inspection of a measurement object is known. Chromatic confocal microscopes operate by refracting white light emitted from a light source into multiple wavelengths, each bent at different refractive indices, and emitting the refracted light onto the surface of the measurement object. Inspection is performed by causing a light beam focused on and reflected from the surface of the measurement object among the refracted light beams to pass through a pinhole, and detecting the wavelength of the transmitted light beam via a spectrometer. The chromatic confocal microscope performs a 3D inspection by pre-tabulating the wavelength information of the focused light and the focal length information of the corresponding optical system, and then measuring the height of the measurement object based on the detected light's wavelength information.

SUMMARY

The conventional chromatic confocal microscope performs a 3D inspection by irradiating only one point on the surface of the measurement object with light emitted from a light source and detecting the light reflected from the surface. As a result, only a point scan method or a minute-length line scan method is possible, and therefore, there is a limitation in that the inspection speed is very slow. Embodiments of the present disclosure address the aforementioned issues of the conventional technology.

The conventional chromatic confocal microscope also has a problem in that the axial resolution depends on the maximum inspection height. As the maximum inspection height increases, the axial resolution also increases (i.e., the axial resolution deteriorates), leading to a degradation in device performance. Embodiments of the present disclosure address the aforementioned issues of the conventional technology.

Furthermore, a phosphor is a material that absorbs light or electromagnetic waves of a specific wavelength and emits light of a different wavelength. In the conventional chromatic confocal microscope, when a measurement object contains a phosphor, the height corresponding to the detected wavelength may be inaccurately measured. An embodiment of the present disclosure addresses the aforementioned issues of the conventional technology.

One aspect of the present disclosure provides embodiments of a three-dimensional shape inspection device. The three-dimensional shape inspection device according to a representative embodiment comprises: a light emitter including a light source and a spatial light modulator configured to modulate light received from the light source, the light emitter being configured to emit multiple light beams having multiple focal points downward onto a surface of a measurement object; an optical system configured to refract respective modulated light beams at different refractive indices for each of multiple wavelengths based on chromatic aberration, thereby forming a measurement section in a vertical direction in which the light refracted for each wavelength is focused; and an image sensor configured to detect color information of light beams that are focused at and reflected from positions corresponding to heights on the surface of the measurement object among the light beams refracted for each of multiple wavelengths, wherein the optical system comprises a focus adjuster configured to change the measurement section by vertically changing positions at which the light beams refracted for each of multiple wavelengths are focused

In an embodiment, wherein the light emitter is configured to emit the multiple light beams having multiple focal points downward onto the surface of the measurement object in a horizontal direction perpendicular to the vertical direction.

In an embodiment, wherein the focus adjuster comprises a variable lens configured to refract each of the modulated light beams, and is configured to vertically change the measurement section by adjusting a curvature of the variable lens.

In an embodiment, wherein the variable lens comprises a liquid lens having a curvature that changes based on a current applied to the focus adjuster.

In an embodiment, wherein the focus adjuster is configured to select one measurement section among multiple measurement sections by vertically changing positions at which the light beams refracted for each of multiple wavelengths are focused.

In an embodiment, wherein one of the multiple measurement sections is different from another of the multiple measurement sections.

In an embodiment, wherein the spatial light modulator is configured to modulate light received from the light source by reflecting the light, and comprises multiple digital micromirror devices arranged in an array.

In an embodiment, wherein the image sensor is configured to detect color information of multiple light beams after the multiple light beams are focused on and reflected from the surface of the measurement object, and wherein respective heights on the surface of the measurement object from which the multiple light beams are reflected are measured based on the color information of the multiple light beams detected by the image sensor.

In an embodiment, wherein the color information comprises RGB information of the light beams that are focused on and reflected from the surface of the measurement object.

In an embodiment, wherein the image sensor is configured to obtain wavelength information of the light beams that are focused on and reflected from the surface of the measurement object based on the RGB information.

In an embodiment, wherein the image sensor comprises any one of a color camera, a multispectral camera, and a monochrome camera with a band-pass filter.

In an embodiment, wherein the light source comprises any one of an LED, a halogen lamp, and a xenon lamp.

In an embodiment, the three-dimensional shape inspection device further comprises a controller configured to measure a height of the surface of the measurement object based on the color information detected by the image sensor

In an embodiment, the three-dimensional shape inspection device further comprises an external light source configured to emit light onto the surface of the measurement object.

In an embodiment, wherein the image sensor is configured to acquire wavelength information of light emitted from the external light source and reflected from the surface of the measurement object.

In an embodiment, the three-dimensional shape inspection device further comprises, a controller configured to control the focus adjuster to change the measurement section when the wavelength of light detected by the image sensor is a second wavelength different from a first wavelength, while the external light source emits light having the first wavelength.

In an embodiment, wherein the controller is configured to control the focus adjuster to change the measurement section so that the wavelengths of the light beams focused at the positions corresponding to the heights on the surface of the measurement object do not comprise a wavelength between the first wavelength and the second wavelength

Another aspect of the present disclosure provides embodiments of a three-dimensional shape inspection device. The three-dimensional shape inspection device according to a representative embodiment comprises: a light emitter configured to emit multiple light beams having multiple focal points downward onto a surface of a measurement object, the light emitter including a light source and a spatial light modulator configured to modulate light received from the light source; an optical system configured to form a measurement section in a vertical direction, in which the light beams refracted for each of multiple wavelengths are focused, by refracting each of the modulated light beams at different refractive indices for each of multiple wavelengths based on chromatic aberration; an image sensor configured to detect color information of light beams that are focused at and reflected from positions corresponding to heights on the surface of the measurement object among the light beams refracted for each of multiple wavelengths; and a focus adjuster configured to change the measurement section by vertically moving the optical system to vertically change the positions at which the light beams refracted for each of multiple wavelengths are focused.

Another aspect of the present disclosure provides embodiments of a method for inspecting a three-dimensional shape. The method for inspecting a three-dimensional shape according to a representative embodiment comprises a light modulation step of modulating light received from a light source to emit multiple light beams having multiple focal points onto a surface of a measurement object; a light emission step of refracting each of the modulated light beams at different refractive indices for each of multiple wavelengths based on chromatic aberration, thereby emitting the modulated light beams downward to form a measurement section in a vertical direction, in which the light beams refracted for each of multiple wavelengths are focused; a focus adjustment step of changing the measurement section by vertically changing positions at which the light beams refracted for each of multiple wavelengths are focused; an information acquisition step of detecting color information of the light beams that are focused at and reflected from positions corresponding to heights on the surface of the measurement object among the light beams refracted for each of multiple wavelengths in the measurement section; and a height measurement step of measuring the height of the surface of the measurement object based on the detected color information.

In an embodiment, wherein the focus adjustment step comprises selecting one measurement section among multiple measurement sections by vertically changing the positions at which the light beams refracted for each of multiple wavelengths are focused, and wherein the information acquisition step and the height measurement step are performed based on the color information of the light beams that are focused at and reflected from positions corresponding to the heights on the surface of the measurement object among the light beams refracted for each of multiple wavelengths in the selected measurement section.

In an embodiment, the method for inspecting a three-dimensional shape further comprises an external light source irradiation step of emitting light onto the surface of the measurement object, wherein the information acquisition step comprises an external light source wavelength detection step of detecting wavelength information of light emitted from the external light source and reflected from the surface of the measurement object, and wherein, when light having a first wavelength is emitted in the external light source irradiation step, the focus adjustment step comprises changing the measurement section when the wavelength of the light detected in the external light source wavelength detection step is a second wavelength different from the first wavelength.

ADVANTAGEOUS EFFECTS

According to embodiments of the present disclosure, it is possible to perform a 3D inspection of a large area of a measurement object at a higher speed by using a spatial light modulator and an image sensor configured to detect color information of light.

According to embodiments of the present disclosure, by dividing the maximum inspectable area into multiple steps and performing an inspection in a stepwise manner, the axial resolution can be reduced, thereby improving the performance of the device.

According to an embodiment of the present disclosure, even when the measurement object includes a phosphor, accurate 3D inspection can be performed by changing the measurement section.

BRIEF DESCRIPTION OF DRAWINGS

FIG. 1 is a schematic view illustrating an operating method of a three-dimensional shape inspection device according to a comparative embodiment of the present disclosure.

FIG. 2 is a graph illustrating a measurement section formed in a vertical direction as light emitted from the light source of FIG. 1 is refracted at different refractive indices for respective wavelengths by an optical system.

FIG. 3 is a schematic view illustrating a measurement section formed in the vertical direction as light emitted from the light source of FIG. 1 is refracted at different refractive indices for respective wavelengths by an optical system.

FIG. 4 is an overall perspective view of a three-dimensional shape inspection device according to an embodiment of the present disclosure.

FIG. 5 is a cross-sectional view taken along line A1-A1' illustrated in FIG. 4.

FIG. 6 is a schematic view illustrating a digital micromirror device used in an embodiment of the present disclosure.

FIG. 7 is a schematic view illustrating a charge-coupled device (CCD) used in an embodiment of the present disclosure.

FIG. 8 is a schematic view illustrating a process in which a three-charge-coupled device acquires RGB information of light according to an embodiment of the present disclosure.

FIG. 9 is a conceptual view illustrating a process of converting the RGB information acquired in FIG. 8 into an HSV coordinate system.

FIG. 10 is a schematic view illustrating the operation of the three-dimensional shape inspection device according to an embodiment of the present disclosure.

FIG. 11 is a perspective view illustrating a focus adjuster according to an embodiment of the present disclosure.

FIG. 12 is a cross-sectional view taken along line S1-S1' illustrated in FIG. 11.

FIG. 13 is a conceptual view illustrating the operating principle of a liquid lens according to an embodiment of the present disclosure.

FIG. 14 is a graph illustrating a process in which one measurement section among multiple measurement sections is selected for inspection according to an embodiment of the present disclosure.

FIG. 15 is a cross-sectional view illustrating an embodiment in which the three-dimensional shape inspection device illustrated in FIG. 5 further includes an external light source.

FIG. 16 is a graph illustrating the operation of the three-dimensional shape inspection device according to an embodiment of the present disclosure when the measurement object contains a phosphor.

FIG. 17 is a flowchart illustrating the flow of an embodiment of a three-dimensional shape inspection method of the present disclosure.

DETAILED DESCRIPTION

Embodiments of the present disclosure are illustrated for describing the technical idea of the present disclosure. The scope of the claims according to the present disclosure is not limited to the embodiments described below or to the detailed descriptions of these embodiments.

All technical or scientific terms used in the present disclosure have meanings that are generally understood by a person having ordinary knowledge in the art to which the present disclosure pertains, unless otherwise specified. The terms used in the present disclosure are all selected only for more clear description of the present disclosure, and are not intended to limit the scope of claims according to the present disclosure.

The expressions "include," "provided with," "have" and the like used herein should be understood as open-ended terms connoting the possibility of inclusion of other embodiments, unless otherwise mentioned in a phrase or sentence including the expressions.

In the present disclosure, the singular of an expression may include the meaning of the plural of the expression unless the context clearly indicates otherwise, and the same applies to singular forms of expressions as set forth in the claims.

The terms "first," "second," etc. used in the present disclosure are used to distinguish multiple components from one another, and are not intended to limit the order or importance of the relevant components.

The term "unit" used in these embodiments means a software component or hardware component, such as a field-programmable gate array (FPGA) and an application specific integrated circuit (ASIC). However, a "unit" is not limited to software and hardware, and it may be configured to be an addressable storage medium or may be configured to run on one or more processors. For example, a "unit" may include components, such as software components, object-oriented software components, class components, and task components, as well as processors, functions, attributes, procedures, subroutines, segments of program codes, drivers, firmware, micro-codes, circuits, data, databases, data structures, tables, arrays, and variables.

The expression "based on" used herein is used to describe one or more factors that influences a decision, an action of judgment or an operation described in a phrase or sentence including the relevant expression, and this expression does not exclude additional factor influencing the decision, the action of judgment or the operation.

In the present disclosure, the expression that a component (e.g., a first component) is "connected" or "coupled" to another component (e.g., a second component) may mean that the first component is connected or coupled to the second component not only directly, but also via another new component (e.g., a third component).

Directional designators such as "downward" and "down" used in the present disclosure are based on the direction in which the object being measured is positioned relative to the three-dimensional shape inspection device in the accompanying drawings, while directional terms like "upward" and "above" refer to the opposite direction, however, this is merely for the purpose of ensuring a clear understanding of the disclosure, and each direction can be defined differently depending on where the reference is set.

Hereinafter, embodiments of the present disclosure will be described with reference to the accompanying drawings. In the accompanying drawings, identical or corresponding components are indicated by identical reference numerals. In the following description of embodiments, redundant descriptions of the identical or corresponding components will be omitted. However, the omission of a description of a component does not imply that such a component is not included in an embodiment.

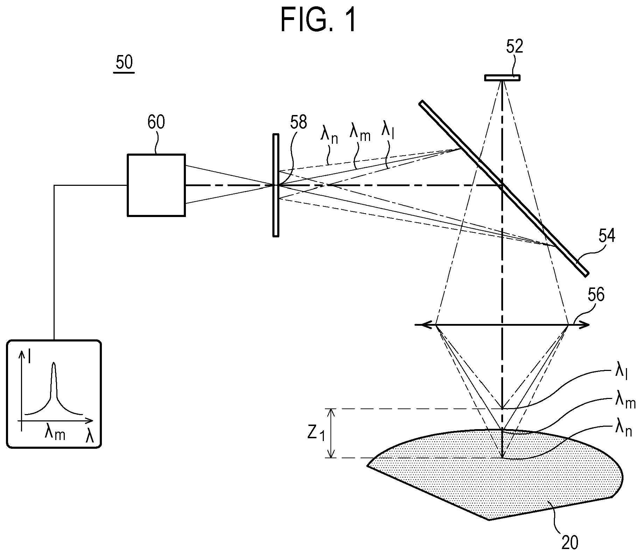

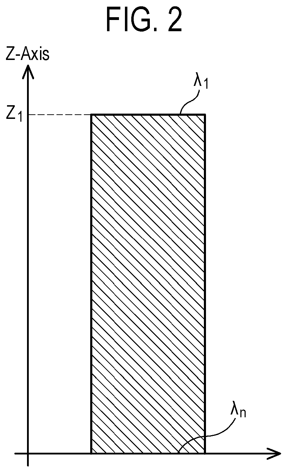

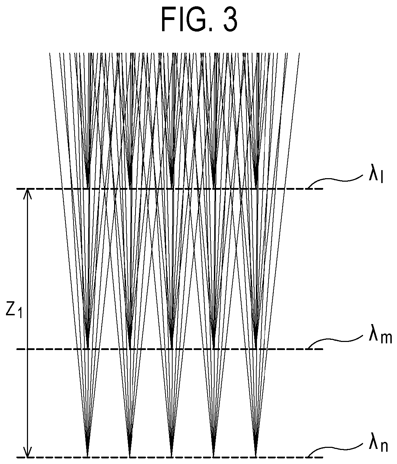

FIG. 1 is a schematic view illustrating an operating method of a three-dimensional shape inspection device according to a comparative embodiment of the present disclosure. FIG. 2 is a graph illustrating a measurement section formed in a vertical direction as light emitted from the light source of FIG. 1 is refracted at different refractive indices for respective wavelengths by an optical system. FIG. 3 is a schematic view illustrating a measurement section formed in the vertical direction as light emitted from the light source of FIG. 1 is refracted at different refractive indices for respective wavelengths by an optical system.

Referring to FIGS. 1 to 3, the operating method of the three-dimensional shape inspection device 50 according to the comparative embodiment is explained as follows.

The three-dimensional shape inspection device 50 may emit light onto a surface of a measurement object 20 by transmit light emitted from a light source 52 through a beam splitter 54. The light source 52 may be configured to emit light having multiple wavelengths. The measurement object 20 may include various objects to be inspected, such as cells, metallic and non-metallic materials, and semiconductor substrates, which are used in fields such as life sciences, semiconductors, and materials science. In addition, the measurement object 20 may include a material such as a transparent material and may include specular surfaces such as semiconductors (e.g., C4-bumps, $\mu$-bumps, and dies).

The light transmitted through the beam splitter 54 may be refracted by an optical system 56. The optical system 56 may be configured to refract incident light at different refractive indices for respective wavelengths based on chromatic aberration. The optical system 56 may be configured to focus light such that, based on chromatic aberration, light having a longer wavelength is focused at a position farther from the optical system 56, and light having a shorter wavelength is focused at a position closer to the optical system 56. For example, referring to FIG. 1, a state in which light having multiple wavelengths is refracted at different refractive indices by the optical system 56 is illustrated, and a state in which light having the shortest wavelength $\lambda_1$ among the multiple wavelengths is focused at the position closest to the optical system 56, while light having the longest wavelength $\lambda_n$ among the multiple wavelengths is focused at the position farthest from the optical system 56, is illustrated. Among the light beams refracted for each of wavelengths, a light beam having a height-corresponding wavelength $\lambda_m$, which is focused at a position corresponding to a height on the surface of the measurement object 20, may be present. The height-corresponding wavelength $\lambda_m$ may have a value between the shortest wavelength $\lambda_1$ and the longest wavelength $\lambda_n$.

The light beams refracted for each of multiple wavelengths may be configured to be reflected from the surface of the measurement object 20 so as to be reflected at the beam splitter 54. The beam splitter 54 may reflect each of the light beams reflected from the surface of the measurement object 20 and having multiple wavelengths toward a pinhole 58. The beam splitter 54, the optical system 56, and the pinhole 58 may be configured to allow only a light beam having a height-corresponding wavelength $\lambda_m$, which is focused and reflected at a position corresponding to a height on the surface of the measurement object 20 among the respective light beams having multiple wavelengths, to pass through the pinhole 58. A spectrometer 60 may be disposed on a light path passing through the pinhole 58. The spectrometer 60 may be configured to detect the spectrum of the light according to wavelengths and to detect intensity information of the light according to wavelengths.

The three-dimensional shape inspection device 50 may be configured to measure the height of the measurement object 20 by detecting the wavelength components of the light focused on the surface of the measurement object 20 through the spectrometer 60. By moving the three-dimensional shape inspection device 50 or the measurement object 20 in a horizontal direction to perform an inspection, a 3D inspection for inspecting the three-dimensional shape of the measurement object 20 may be performed. The three-dimensional shape inspection device 50 according to the comparative embodiment is limited in that only a point scan method or a minute-length line scan method is possible, in which light emitted from the light source 52 is emitted only to a single point on the surface of a measurement object to perform 3D inspection, resulting in a very slow inspection speed. The inspection speed of the point scan method of the three-dimensional shape inspection device 50 according to the comparative embodiment may be less than 1 mm$^2$.

With reference to FIGS. 2 to 3, the axial resolution of the three-dimensional shape inspection device 50 according to the comparative embodiment will be described.

The axial resolution of the three-dimensional shape inspection device 50 satisfies the following Equation 1.

[Equation 1]

$$AxialRes\,[\mu m] = k \times \frac{\Delta Measurement\,[\mu m]}{\Delta\lambda\,[nm]} \times \frac{Spectral\ Res\,[nm]}{1}$$

The axial resolution (Axial Res) is proportional to the measurement range (ΔMeasurement Range) of the measurement section and the spectral resolution (Spectral Res), and is inversely proportional to the difference $\Delta\lambda$ between the maximum and minimum wavelengths of the light source 52 used for inspection. The proportional constant k in Equation 1 is a constant determined during the design process of the inspection device or according to the inspection environment. The resolution described herein refers to the shortest distance at which two closely positioned points can be distinguished, and as this value decreases, the performance of the inspection device improves. For example, as illustrated in FIGS. 2 and 3, the measurement range (ΔMeasurement Range) of the measurement section is the distance between the point where light having the shortest wavelength $\lambda_1$ is focused and the point where light having the longest wavelength $\lambda_n$ is focused. The wavelength difference $\Delta\lambda$ is the difference between the shortest wavelength $\lambda_1$ and the longest wavelength $\lambda_n$, and the measurement range (ΔMeasurement Range) is $Z_1$.

The three-dimensional shape inspection device 50 according to the aforementioned comparative embodiment allows for height measurement of the measurement object when the measurement object is positioned at the location where light is focused. Therefore, the inspection range of the measurement object may change depending on the measurement range (ΔMeasurement Range) of the measurement section. That is, the measurement range may represent the maximum inspection height of the three-dimensional shape inspection device 50. The three-dimensional shape inspection device 50 according to the comparative embodiment has a problem in that, as the measurement range increases, that is, as the maximum inspection height increases, the axial resolution also increases.

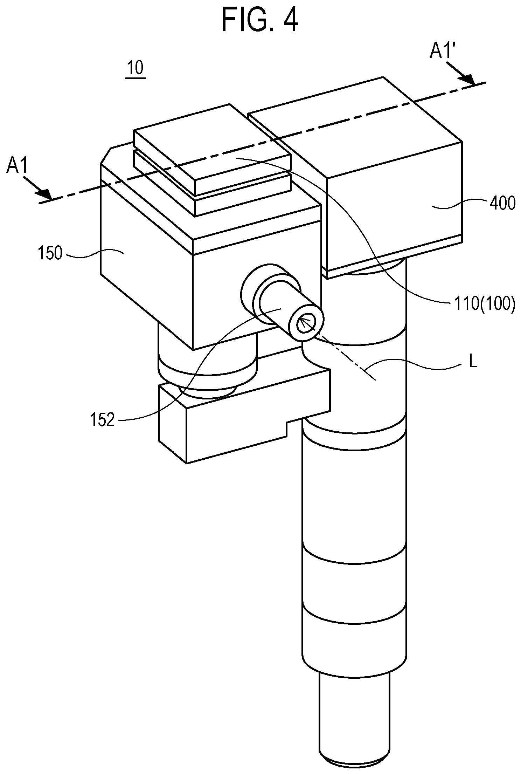

In contrast, a three-dimensional shape inspection device and a three-dimensional shape inspection method according to an embodiment of the present disclosure, which will be described with reference to FIGS. 4 to 17, enable high-speed, large-area 3D inspection of a measurement object by using a spatial light modulator and an image sensor configured to detect color information of light. In addition, in an embodiment, by utilizing the focus adjuster, the maximum inspectable area may be divided into multiple steps for inspection, thereby improving the axial resolution.

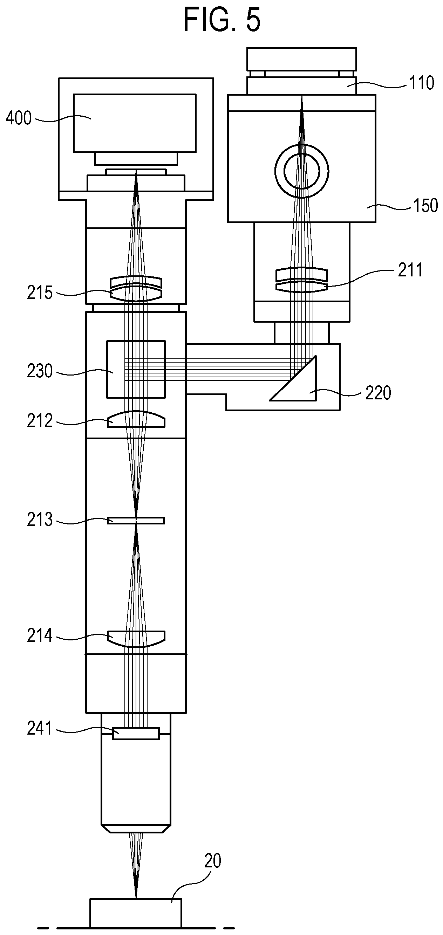

FIG. 4 is an overall perspective view of a three-dimensional shape inspection device according to an embodiment of the present disclosure. FIG. 5 is a cross-sectional view taken along line A1-A1' illustrated in FIG. 4.

Referring to FIGS. 4 and 5, a three-dimensional shape inspection device 10 may be configured to inspect the three-dimensional shape of a measurement object 20. The three-dimensional shape inspection device 10 may be configured to inspect the shape of the measurement object 20 by emitting light onto the measurement object 20 and detecting information of the reflected light. By moving the position of the three-dimensional shape inspection device 10 or the measurement object 20 and detecting various positions and heights on the surface of the measurement object 20, the three-dimensional shape of the measurement object 20 may be inspected. In FIG. 5, for convenience of explanation, the three-dimensional shape inspection device 10 and the measurement object 20 are illustrated as being positioned at a single point. However, the present disclosure is not limited thereto, and the three-dimensional shape inspection device 10 and the measurement object 20 may move in the vertical direction or the horizontal direction for inspection.

The three-dimensional shape inspection device 10 may include a light emitter 100, an optical system, and an image sensor 400.

The light emitter 100 may be configured to emit light onto the surface of the measurement object 20. The light emitter 100 may be configured to emit light downward to a location where the measurement object 20 is positioned.

The light emitter 100 may include a light source (not source) and a spatial light modulator 110. The light source may be a white light source having multiple wavelengths. The light source may include any one of an LED, a halogen lamp, and a xenon lamp. The light source may include Sunlike LED. The present disclosure is not limited thereto, and any light source capable of emitting light having multiple wavelengths may be used in the present disclosure.

The light emitter 100 may include a light emitter case 150 configured to receive light L from the light source into the interior of the three-dimensional shape inspection device 10. The light emitter case 150 may have an inner space formed therein and may be configured to receive the light L from the light source. The inner space of the light emitter case 150 may serve as an intermediate path along which the light L from the light source is emitted onto the measurement object 20. The light emitter case 150 may include a light receiver 152, which has a hole formed therein and protrudes outward. The light L from the light source may be received into the interior of the three-dimensional shape inspection device 10 through the light receiver 152.

The spatial light modulator (SLM) 120 may be configured to modulate the light L received from the light source. The spatial light modulator 110 may include any device capable of changing the amplitude or phase information of incident light depending on position. The spatial light modulator 110 may be a device capable of forming an optical image in a three-dimensional space by controlling the spatial distribution of light.

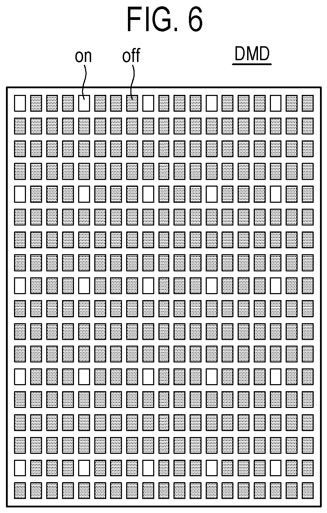

The spatial light modulator 110 may be configured to modulate the light received from the light source so that the light has multiple focal points. The light emitter 100 may be configured to emit multiple light beams having multiple focal points onto the surface of the measurement object 20. In FIGS. 4 and 5, a single light beam having a single focal point is illustrated as being emitted onto the surface of the measurement object 20. However, this is for convenience of explanation, and the configuration may be such that multiple light beams having multiple focal points are emitted onto the surface of the measurement object 20 using multiple digital micromirror devices (DMDs), which are an example of a spatial light modulator to be described later with reference to FIG. 6.

The optical system may refract light for each of multiple wavelengths by using chromatic aberration. The optical system may refract light beams at different refractive indices for each of multiple wavelengths. The optical system may refract each of the light beams modulated by the spatial light modulator 110. The optical system may be configured to form a measurement section in which the light beams refracted for each wavelength are focused by refracting the light beams having multiple wavelengths at different refractive indices. The measurement section may be formed in the vertical direction. In FIGS. 4 and 5, a single light beam having a single focal point is illustrated as being emitted onto the surface of the measurement object 20. However, as illustrated in FIGS. 2 and 3, modulated light beams may form a measurement section in the vertical direction by refracting the light L received from the light source at different refractive indices for each of multiple wavelengths through the optical system.

The optical system may include multiple lenses 211, 212, 213, 214, 215, and 241. The lenses may include any optical device that converges or diverges light by refracting received light. The lenses may include a variable lens 241 having an adjustable curvature.

The three-dimensional shape inspection device 10 may include a reflector 220 configured to reflect light and change the light path. The reflector 220 may include an optical device configured to reflect received light so that the light is transmitted along a different path.

The three-dimensional shape inspection device 10 may include a beam splitter 230 configured to reflect a part of the light and transmit another portion of the light, thereby splitting the light path into two paths. The beam splitter 230 may include an optical device configured to transmit a part of the received light and reflect another portion.

The image sensor 400 may be configured to detect color information of the light. The image sensor 400 may be configured to detect light beams reflected from the measurement object 20. The image sensor 400 may be configured to detect a light beam that is focused at and reflected from a position corresponding to a height on the surface of the measurement object 20, among the light beams refracted for each wavelength and reflected from the measurement object 20. The image sensor 400 may be configured to detect color information of multiple light beams that are focused on and reflected from the surface of the measurement object 20.

In an embodiment, the three-dimensional shape inspection device 10 may include a controller configured to measure the height of the surface of the measurement object 20. The controller may include a computer that stores programs and/or information. The controller may be configured to measure the height of the measurement object 20 based on the color information detected by the image sensor 400. Based on the color information of multiple light beams detected by the image sensor 400, the height of the measurement object 20, from which the multiple light beams are reflected, may be measured. The image sensor 400 may be configured to measure the respective heights, from which multiple light beams are reflected, on the surface of the measurement object 20. The image sensor 400 of the three-dimensional shape inspection device 10 according to the present disclosure may measure the heights at multiple positions on the surface of the measurement object 20 at once, thereby enabling high-speed and large-area inspection of the measurement object.

FIG. 6 is a schematic view illustrating a digital micromirror device used in an embodiment of the present disclosure. With reference to FIG. 6, an example of a spatial light modulator 110 according to an embodiment of the present disclosure, which is a digital micromirror device (DMD), will be described.

The spatial light modulator 110 may include a digital micromirror device (DMD) using digital light processing (DLP) technology. The digital micromirror device (DMD) may include multiple digital micromirror devices (DMDs) arranged in an array format. The digital micromirror devices (DMDs) may be microscopic mirrors fabricated using microelectromechanical systems (MEMS). That is, each of the multiple digital micromirror devices (DMDs) may function as a pixel. The digital micromirror devices (DMDs) in FIG. 6 form an array of 18 rows and 19 columns. However, the numbers of rows and columns forming the array are merely exemplary and may have any other numbers of rows and columns.

The digital micromirror devices (DMDs) may each include an electrode provided at the bottom to receive an electrical signal from an external source, and a reflective mirror provided at the top to reflect light. When an electrical signal is applied to the electrode at the bottom of each digital micromirror device (DMD), the angle of the reflective mirror is adjusted so that the light may be reflected to an external projection lens (not illustrated) and emitted, or reflected to an absorption plate (not illustrated) and absorbed without being emitted. The light of each individual digital micromirror device (DMD) may be adjusted to an on or off state by adjusting the electrode at the bottom of the digital micromirror device (DMD). Since the spatial light modulator 110 is capable of adjusting each pixel of the digital micromirror devices (DMDs) to an on or off state, the spatial light modulator may be configured to modulate the light L received from the light source into light having a desired shape and form. In FIG. 6, the digital micromirror devices in the $(4n+1)^{th}$ rows and $(4n+1)^{th}$ columns of the array are illustrated as being in the on state, where n is an integer equal to or greater than 0. However, the present disclosure is not limited thereto, and the digital micromirror devices of individual array elements may be arbitrarily adjusted to an on/off state.

Referring to FIGS. 4 to 6, the light emitter 100 may be configured to emit multiple light beams downward onto the surface of the measurement object 20 in a horizontal direction perpendicular to the vertical direction. Each of the multiple digital micromirror devices (DMDs) may be adjusted to an on or off state, and light reflected from the digital micromirror devices (DMDs) in the on state may be emitted toward the measurement object 20. Accordingly, the multiple light beams emitted from the multiple digital micromirror devices (DMDs), respectively, and modulated may be configured to have multiple focal points. The three-dimensional shape inspection device 10 according to an embodiment of the present disclosure may be configured to emit multiple light beams having multiple focal points onto the surface of the measurement object 20.

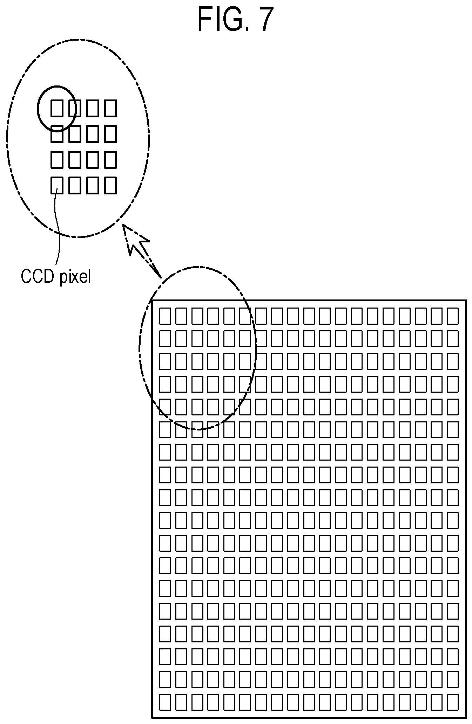

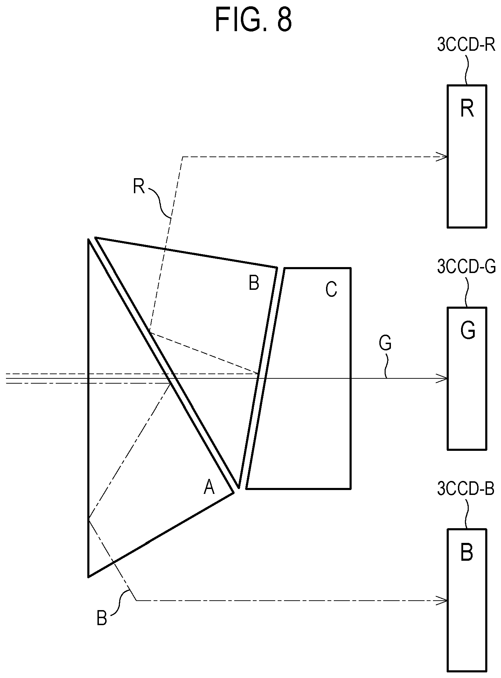

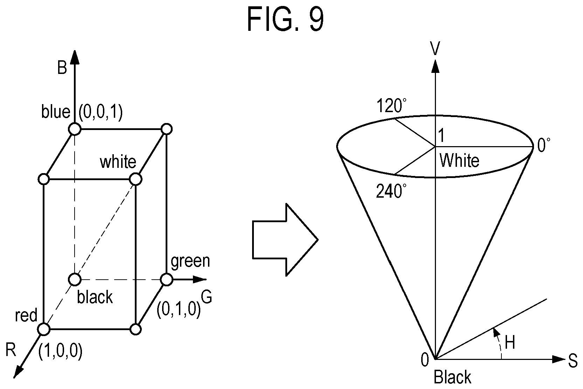

FIG. 7 is a schematic view illustrating a charge-coupled device (CCD) used in an embodiment of the present disclosure. FIG. 8 is a schematic view illustrating a process in which a three-charge-coupled device acquires RGB information of light according to an embodiment of the present disclosure. FIG. 9 is a conceptual view illustrating a process of converting the RGB information acquired in FIG. 8 into an HSV coordinate system.

In an embodiment referring to FIG. 7, the image sensor may include a charge-coupled device (hereinafter referred to as "CCD"). The charge-coupled device (CCD) may refer to a sensor that converts light into charge to obtain information of the light. The charge-coupled device (CCD) may be a configured as a pixel-type chip, in which photodiodes are arranged inside to generate electrons depending on the amount of photons, thereby obtaining intensity information of the light by measuring and reconstructing the amount of electrons or current.

The charge-coupled device (CCD) may include multiple charge-coupled devices (CCDs) arranged in an array format. Each of the charge-coupled devices (CCDs) may function as a pixel. The multiple charge-coupled devices (CCDs) may be configured to detect color information of multiple modulated light beams that have multiple focal points and are focused on and reflected from the surface of the measurement object 20. Based on the color information of the multiple light beams detected by the charge-coupled devices (CCDs), the respective heights on the surface of the measurement object 20, from which the multiple light beams are reflected, may be measured.

The charge-coupled device (CCD) may be a single-charge-coupled device (1CCD) having a single charge-coupled device or a three-charge-coupled device (hereinafter referred to as 3CCD) having three separate charge-coupled devices.

For example, referring to FIG. 8, the three-charge-coupled device (3CCD) may include three separate charge-coupled devices (3CCD-R, 3CCD-G, and 3CCD-B). Each of the three separate charge-coupled devices (3CCD-R, 3CCD-G, and 3CCD-B) may be positioned on the optical paths of light separated into R, G, and B components by prisms A, B, and C, respectively, and may detect the R, G, and B components of the light. The three-charge-coupled device (3CCD) detects the R, G, and B components separated by the prisms A, B, and C, respectively, and may provide higher color reproducibility and image quality than the single-charge-coupled device (1CCD) type.

In another embodiment, which is not illustrated, the image sensor 400 may include a complementary metal-oxide-semiconductor (CMOS). The CMOS may include multiple pixels. The light reaching each pixel may be collected by a photodiode to generate electrons, and the generated electrons may be converted into a voltage to detect optical information.

The image sensor 400 may include any one of a color camera, a multispectral camera, and a monochrome camera with a band-pass filter. The image sensor 400 of the present disclosure is not limited thereto and includes any device capable of detecting RGB information of light.

The color information of light detected by the image sensor 400 may include RGB information. For example, the color information of light detected by the three-charge-coupled device (3CCD) of the image sensor 400 may include RGB information. The RGB information may be RGB information of a light beam focused at and reflected from a position corresponding to a height on the surface of the measurement object 20, among the light beams refracted for each wavelength.

The image sensor 400 may be configured to acquire wavelength information of light based on the detected RGB information.

In an embodiment not illustrated, by creating a lookup table, in which wavelength information corresponding to RGB information has been pre-tabulated, the RGB information detected by the image sensor 400 may be converted into wavelength information of light.

In another embodiment referring to FIG. 9, the image sensor 400 may be configured to acquire wavelength information of light that is focused on and reflected from the surface of the measurement object 20 by converting RGB information into another coordinate system. The other coordinate system may be an HSV coordinate system or a CIE XYZ coordinate system. For example, by converting the RGB information detected by the image sensor 400 into the HSV coordinate system using the following Equations 2, 3, and 4, the wavelength information of light may be acquired through HSV information. H represents Hue and has a value ranging from 0° to 360°, where 0° and 360° may correspond to the hue of red. S represents Saturation and, assuming that the most vivid state is 100%, a value of 0% may indicate an achromatic color with the same brightness. V represents Value and indicates the degree of brightness, where white is set to 100% and black is set to 0%. Since the wavelength information of light corresponding to the H value of the light source is a predetermined value (for example, when H is 0° or 360°, the wavelength of red light ranges from 625 nm to 740 nm), the wavelength information of the light source may be detected through the H value obtained via HSV coordinate system conversion.

[Equation 2]

$$H = \theta \ (if \ B \leq G)$$
$$= 360 - \theta \ (if \ B \geq G)$$
$$\theta = \cos^{-1}\left\{ \frac{\frac{1}{2}[(R-G)+(R-B)]}{\left((R-G)^2 + (R-G)(G-B)^{\frac{1}{2}}\right)} \right\}$$

[Equation 3]

$$S = 1 - \frac{3}{(R+G+B)}[\min(R,G,B)]$$

[Equation 4]

$$V = \frac{(R + G + B)}{3}$$

In addition, in the CIE chromaticity diagram obtained by converting RGB information into the CIE XYZ coordinate system, the dominant wavelength, which is the wavelength of monochromatic light at the position closest to the chromaticity coordinates of the light source, may be detected. The aforementioned HSV coordinate system and CIE XYZ coordinate system are merely examples provided to explain the present disclosure, and any coordinate system capable of acquiring wavelength information of light may be used.

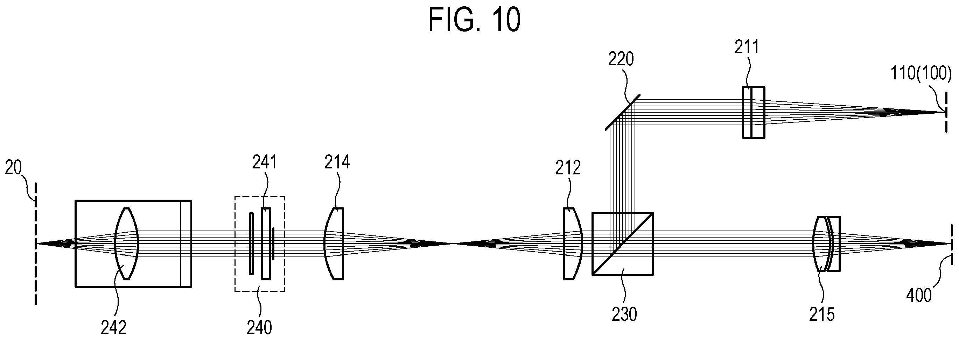

FIG. 10 is a schematic view illustrating the operation of the three-dimensional shape inspection device according to an embodiment of the present disclosure. Referring to FIGS. 4, 5, and 10, the inspection method of the three-dimensional shape inspection device 10 of the present disclosure is described as follows.

The spatial light modulator 110 modulates the light L received from the light source and emits the modulated light onto the surface of the measurement object 20. An optical system for delivering light may be disposed on the path along which light travels from the spatial light modulator 110 to the measurement object 20. For example, the optical system may include multiple lenses 211, 212, 214, and 241 disposed along the path. A beam splitter 230 may be disposed on the path along which the light travels from the spatial light modulator 110 to the measurement object 20. The beam splitter 230 may form the light path from the spatial light modulator 110 to the measurement object 20 by reflecting the received light. The optical system may include a lens 242 (not illustrated) positioned before the light arrives at the measurement object 20. The lens 242 may include multiple lenses. The lens 242 may be an objective lens.

The light reflected from the surface of the measurement object 20 is configured to be delivered to the image sensor 400. An optical system for delivering the light may be disposed on the path along which the light reflected from the measurement object 20 travels to the image sensor 400. For example, the optical system may include multiple lenses 241, 214, 212, and 215 disposed along the path. A beam splitter 230 may be disposed on the optical path through which light travels from the measurement object 20 to the image sensor 400. The beam splitter 230 may form the optical path from the measurement object 20 to the image sensor 400 by transmitting the received light. The image sensor 400 may measure the height of the measurement object 20 by detecting color information of a light beam that is focused at and reflected from a position corresponding to the height on the surface of the measurement object 20, among the light beams refracted for each wavelength. The optical path formed to ensure that the light L emitted from the light source is reflected from the measurement object 20 and delivered to the image sensor 400 is not limited thereto, and an arbitrary optical path may be formed by disposing lenses, a reflector 220, and a beam splitter 230.

The three-dimensional shape inspection device 10 may include a focus adjuster configured to change the measurement section by vertically changing the positions at which the light beams refracted for each wavelength by the optical system are focused. For example, the focus adjuster may be implemented as means for changing the position of the optical system according to an embodiment described later, or may be implemented as means constituting a part of the optical system to change the positions at which the light beams are focused.

The focus adjuster may change the positions at which the light beams refracted for each wavelength are focused. The focus adjuster may vertically change the positions at which the light beams are focused. The focus adjuster may be configured to change the measurement section in which the light beams refracted for each wavelength are focused. The focus adjuster may vertically change the point at which the light beam having the shortest wavelength among the light beams refracted for each wavelength is focused. The focus adjuster may vertically change the point at which the light beam having the longest wavelength among the light beams refracted for each wavelength is focused. The focus adjuster may vertically change the point at which a light beam having a wavelength between the shortest wavelength and the longest wavelength among the light beams refracted for each wavelength is focused.

In an embodiment not illustrated, the focus adjuster may operate through mechanical means for changing the measurement section by adjusting the position of the optical system. The focus adjuster may be configured to change the measurement section by vertically moving the optical system.

In another embodiment described referring to FIGS. 10 to 13, the focus adjuster 240 may constitute a part of the optical system. Hereinafter, an explanation will be given based on the embodiment according to FIGS. 10 to 13.

Referring to FIG. 10, the optical system may include the focus adjuster 240. In the present disclosure, the focus adjuster 240 is illustrated as being disposed on the optical path immediately before the light arrives at the measurement object 20. However, the present disclosure is not limited thereto, and the focus adjuster 240 may be disposed on any optical path from the light source to the image sensor 400.

The focus adjuster 240 may operate through electromagnetic means that changes the measurement section by applying, for example, a current.

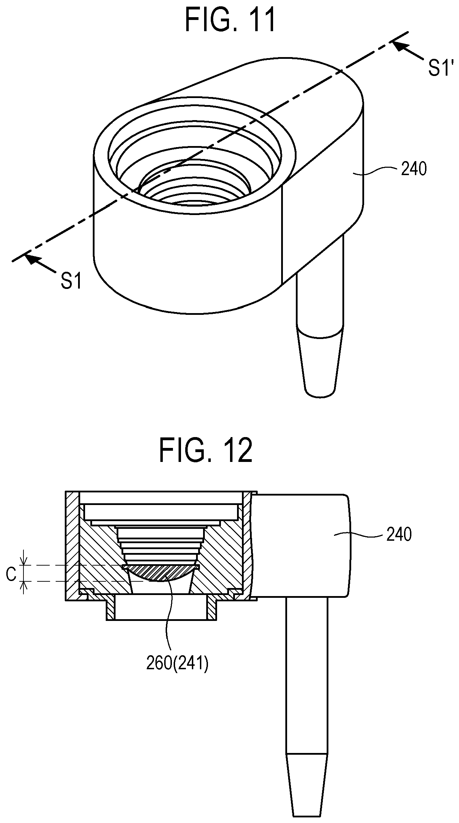

FIG. 11 is a perspective view illustrating a focus adjuster according to an embodiment of the present disclosure.

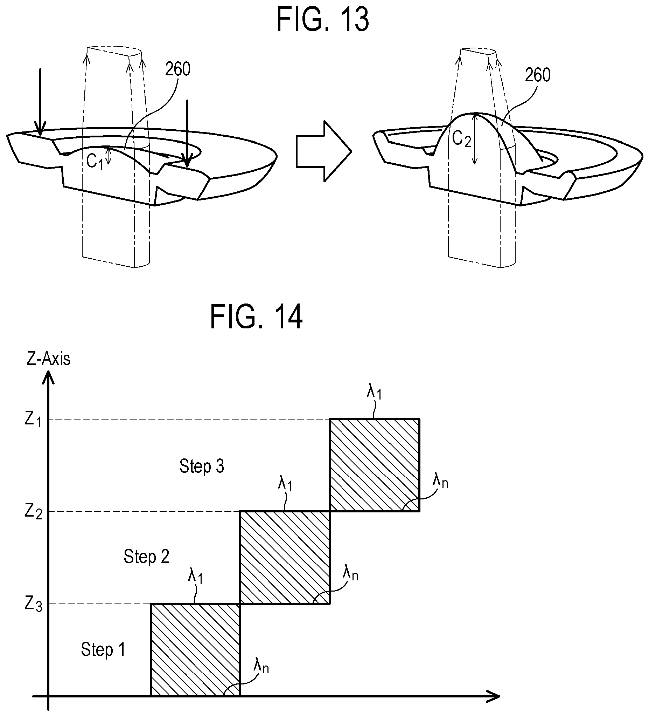

FIG. 12 is a cross-sectional view taken along line S1-S1' illustrated in FIG. 11. FIG. 13 is a conceptual view illustrating the operating principle of a liquid lens according to an embodiment of the present disclosure.

Referring to FIGS. 10 to 13, the focus adjuster 240 may include a variable lens 241 that refracts each of light beams modulated by the spatial light modulator 110. The focus adjuster 240 may be configured to adjust the curvature of the variable lens 241. In general, as the curvature of the variable lens 241 increases, the focal length, which is the distance from the variable lens to the point where the light is focused, may become shorter. As the focus adjuster 240 adjusts the curvature of the variable lens 241, the thickness C of the variable lens 241 may be adjusted. In general, as the curvature of the variable lens 241 increases, the thickness C of the variable lens 241 may also increase.

The curvature of the variable lens 241 may be adjusted based on the current applied to the focus adjuster 240. By adjusting the current applied to the focus adjuster 240, the curvature of the variable lens 241 may be adjusted. The focus adjuster 240 may be configured to vertically change the measurement section by adjusting the curvature of the variable lens 241, thereby vertically changing the measurement section in which the light beams refracted for each wavelength are focused.

The variable lens 241 may include a liquid lens 260, which has a variable curvature. The liquid lens 260 may receive the applied current and change its curvature accordingly. By adjusting the applied current, the curvature of the liquid lens 260 may be adjusted. For example, the thickness of the liquid lens may increase ($C1 \rightarrow C2$) (see FIG. 13) by adjusting the current applied to the liquid lens 260 to increase the curvature of the liquid lens 260. As the curvature and thickness of the liquid lens 260 increase, the focal length of the liquid lens 260 may decrease, and the measurement section may be vertically changed by the amount of the reduced focal length (see FIG. 13).

FIG. 14 is a graph illustrating a process in which one measurement section among multiple measurement sections is selected for inspection according to an embodiment of the present disclosure.

The focus adjuster 240 may be configured to select one measurement section among multiple measurement sections by changing the positions at which the light beams refracted for each wavelength are focused. The focus adjuster 240 may be configured to vertically select multiple measurement sections by vertically changing the positions at which the light beams are focused. For example, the focus adjuster 240 may perform an inspection by selecting one measurement section among a first measurement section ($0$ to $Z_3$), a second measurement section ($Z_1$ to $Z_2$), and a third measurement section ($Z_2$ to $Z_3$). Compared to the comparative embodiment illustrated in FIGS. 1 to 3, the present disclosure enables measurement by dividing the measurement section ($0$ to $Z_1$) into multiple measurement sections. This allows for reducing the value of the measurement range ($\Delta$Measurement Range) in Equation 1, thereby reducing the axial resolution (i.e., reducing the axial resolution by a factor of three for the same maximum measurable height $Z_1$). In FIG. 14, three divided measurement sections are illustrated for explanation purposes. However, the present disclosure is not limited thereto, and the inspection may be performed by dividing the measurement section into one or more measurement sections.

In an embodiment, one measurement section among the multiple measurement sections may be configured to differ from another measurement section among the multiple measurement sections. The one measurement section may be configured such that its level in the vertical direction differs from that of the other measurement section. A portion of the one measurement section may be configured to have the same level as a portion of the other measurement section (i.e., at least one section having the same level may exist between different measurement sections). All levels of the one measurement section may be configured to differ from all levels of the other measurement section. FIG. 14 illustrates an embodiment in which the levels of all sections within one measurement section differ from those of all sections within another measurement section. However, the present disclosure is not limited thereto.

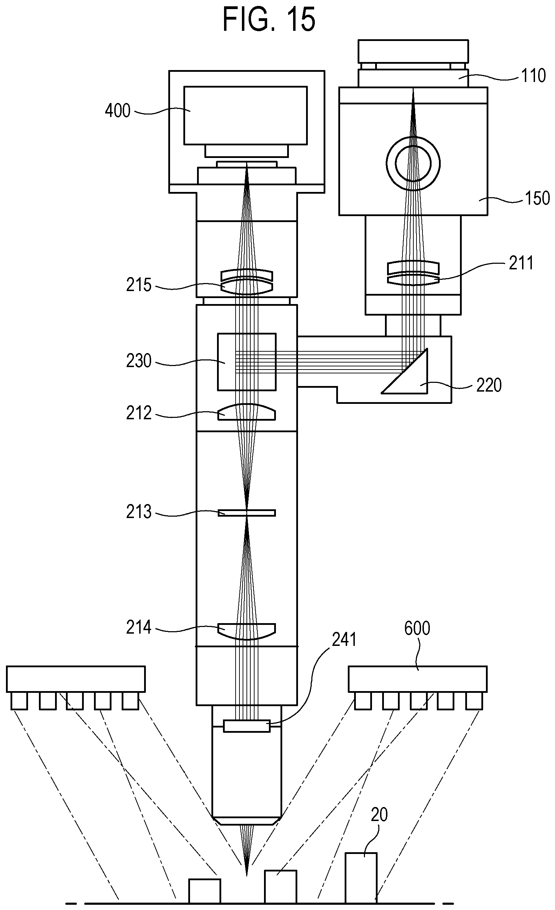

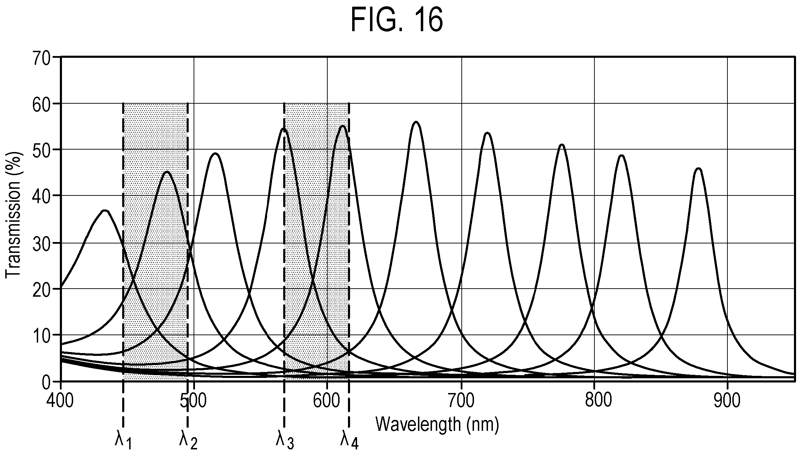

FIG. 15 is a cross-sectional view illustrating an embodiment in which the three-dimensional shape inspection device illustrated in FIG. 5 further includes an external light source. FIG. 16 is a graph illustrating the operation of the three-dimensional shape inspection device according to an embodiment of the present disclosure when the measurement object contains a phosphor.

Referring to FIGS. 15 and 16, the operation of the three-dimensional shape inspection device of the present disclosure is described in the case where the measurement object contains a phosphor.

A phosphor is a material that absorbs light or electromagnetic waves of a specific wavelength and emits light of a different wavelength. When the measurement object contains a phosphor, a process is required to confirm whether the wavelength of the detected reflected light corresponds to a wavelength reflected from a pure measurement object without a phosphor or to a wavelength emitted by the phosphor upon excitation. In addition, in the inspection using the three-dimensional shape inspection device, it is necessary to adjust the measurement section so that light having a specific wavelength is not focused and reflected from the surface of the measurement object during the inspection.

Referring to FIG. 15, the three-dimensional shape inspection device 10 may include an external light source 600 configured to emit light onto the surface of the measurement object 20. The external light source 600 may be configured to emit light having a single wavelength onto the surface of the measurement object 20. The external light source 600 may be configured to emit light having a single wavelength onto the measurement object 20 and then further emit light while increasing or decreasing the wavelength of the light with a single wavelength, thereby emitting light of multiple wavelengths onto the surface of the measurement object 20. The image sensor 400 may be configured to acquire wavelength information of light emitted from the external light source 600 and reflected from the surface of the measurement object 20.

Referring to FIG. 16, a controller may confirm that a phosphor is present in the measurement object 20 when light having a first wavelength $\lambda_1$ is emitted onto the measurement object 20 from the external light source 600 and the wavelength of the light reflected from the measurement object 20 and detected by the image sensor 400 is a second wavelength $\lambda_2$ different from the first wavelength $\lambda_1$. The controller may be configured to control the focus adjuster 240 to change the measurement section when emits light having a first wavelength $\lambda_1$ is emitted onto the measurement object 20 from the external light source 600 and the wavelength of the light reflected and detected by the image sensor 400 is a second wavelength $\lambda_2$. The controller may be configured to control the focus adjuster 240 to avoid detecting light excited by the phosphor contained in the measurement object through the image sensor 400, which detects light reflected from the measurement object.

The controller may be configured to control the focus adjuster 240 to change the measurement section so that the wavelength of the light focused at the position corresponding to the height on the surface of the measurement object 20 does not include a wavelength between the first wavelength $\lambda_1$ and the second wavelength $\lambda_2$. When the wavelength of the light focused at the position corresponding to the height on the surface of the measurement object 20 includes a wavelength between the first wavelength $\lambda_1$ and the second wavelength $\lambda_2$, the height corresponding to the wavelength detected by the image sensor 400 in the inspection process may not be accurate. The measurement section may be changed to a range from a third wavelength $\lambda_3$ to a fourth wavelength $\lambda_4$, where the wavelength of the light focused at a position corresponding to a height on the surface of the measurement object 20 does not include any wavelength between the first wavelength $\lambda_1$ and the second wavelength $\lambda_2$ (see FIG. 16). In FIG. 16, the first wavelength $\lambda_1$ and the second wavelength $\lambda_2$ are illustrated as having values of about 450 nm to 500 nm, and the third wavelength $\lambda_3$ and the fourth wavelength $\lambda_4$ are illustrated as having values of 570 nm to 620 nm. However, the present disclosure is not limited thereto.

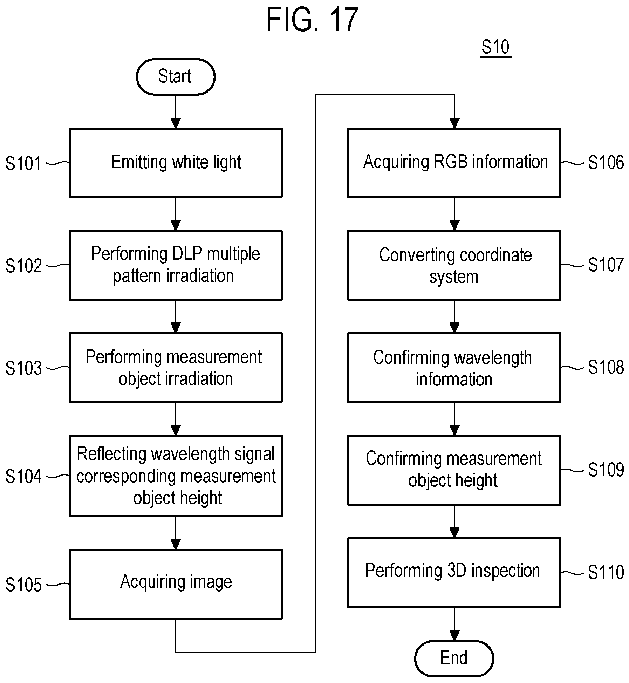

FIG. 17 is a flowchart illustrating the flow of an embodiment of a three-dimensional shape inspection method of the present disclosure.

Referring to FIGS. 4, 5, and 17, the three-dimensional shape inspection method (S10) may include a white light emission step (S101), a DLP multiple pattern irradiation step (S102), a measurement object irradiation step (S103), and a step of reflecting a wavelength signal corresponding to the height of a measurement object (S104).

The white light emission step (S101) is a step of emitting light L for irradiation onto the surface of the measurement object 20 from the light source. The DLP multiple pattern irradiation step (S102) may be a step of modulating the light received in the white light emission step (S101). The DLP multiple pattern irradiation step (S102) may be configured to modulate the light L received from the light source so as to emit multiple light beams having multiple focal points onto the surface of the measurement object 20. In the DLP multiple pattern irradiation step (S102), the light modulation may be performed through the spatial light modulator 110. The DLP multiple pattern irradiation step (S102) may correspond to the light modulation step.

The measurement object irradiation step (S103) may be configured to emit downward each of the light beams modulated in the DLP multiple pattern irradiation step (S102) so as to form a measurement section in the vertical direction, in which the light beams refracted for each wavelength are focused, by refracting the light beams at different refractive indices for each of multiple wavelengths based on chromatic aberration. In the measurement object irradiation step (S103), the modulated light beams may form the measurement section through the optical system. The measurement object irradiation step (S103) may correspond to the light emission step.

The step of reflecting a wavelength signal corresponding to the height of the measurement object (S104) may be a step of reflecting a light beam focused at a position corresponding to a height on the surface of the measurement object 20 among the light beams refracted for each wavelength and emitted onto the measurement object in the measurement object irradiation step (S103).

The three-dimensional shape inspection method (S10) may include an information acquisition step of detecting the color information of the light beam that is focused at and reflected from a height on the surface of the measurement object 20 among the light beams refracted for each wavelength in the measurement section.

The information acquisition step may include an image acquisition step (S105), an RGB information acquisition step (S106), a coordinate system conversion step (S107), and a wavelength information confirmation step (S108).

The image acquisition step (S105) may be a step of receiving an image or information of the light beam focused at and reflected from a position corresponding to a height on the surface of the measurement object 20. The image acquisition step (S105) may be configured to receive the light beam reflected from the measurement object 20 through the image sensor 400. The RGB information acquisition step (S106) may be a step of acquiring the RGB information of the light beam received in the image acquisition step (S105). The RGB information acquisition step (S106) may be configured to acquire the RGB information of the light beam through the three-charge-coupled device (3CCD) of the image sensor 400.

The coordinate system conversion step (S107) may include a step of converting the RGB information acquired in the RGB information acquisition step (S106) into another coordinate system (e.g., the HSV coordinate system or the CIE XYZ coordinate system). The wavelength information confirmation step (S108) may include a step of confirming the wavelength information of the light beam based on the information obtained in the coordinate system conversion step (S107). In the wavelength information confirmation step (S108), the wavelength information of the light beam may be confirmed by using the H value of the HSV coordinate system or the dominant wavelength information of the CIE XYZ coordinate system, as described above.

The three-dimensional shape inspection method (S10) may include a measurement object height confirmation step (S109) of measuring the height of the surface of the measurement object based on the color information detected in the information acquisition step. In the measurement object height confirmation step (S109), the height of the measurement object may be measured by detecting the color information of a light beam focused at and reflected from a position corresponding to a height on the surface of the measurement object 20 among the light beams refracted for each wavelength. The measurement object height confirmation step (S109) may correspond to the height measurement step.

The three-dimensional shape inspection method (S10) may include a 3D inspection execution step (S110) after the measurement object height confirmation step. The 3D inspection execution step (S110) may include at least one of the aforementioned steps (S101 to S109), and by performing the steps (S101 to S109) multiple times, inspection may be performed on multiple surfaces of the measurement object 20.

The three-dimensional shape inspection method (S10) may include a focus adjustment step for changing the measurement section by vertically changing the positions at which the light beams refracted for each wavelength are focused. The focus adjustment step may be a step in which the measurement section is changed by the focus adjuster 240. The focus adjustment step may be performed before the white light emission step (S101) or before the white light emission step in the 3D inspection execution step (S110), which is performed one or more times. As a result, the focus adjustment step may be repeatedly performed multiple times.

The focus adjustment step may include a measurement section selection step for selecting one measurement section among multiple measurement sections by vertically changing the positions at which the light beams refracted for each wavelength are focused. The measurement section selection step may be configured to enable selection of multiple measurement sections in the vertical direction by vertically changing the positions at which the light beams are focused using the focus adjuster 240. The information acquisition step and the height measurement step may be performed based on the color information of the light that is refracted for each wavelength and focused at and reflected from a position corresponding to the height on the surface of the measurement object, among the light beams in any one measurement section selected in the measurement section selection step. The measurement section selection step may be performed before the white light emission step (S101) or before the white light emission step in the 3D inspection execution step (S110), which is performed one or more times. As a result, the measurement section selection step may be repeatedly performed multiple times.

The three-dimensional shape inspection method (S10) may further include an external light source irradiation step for emitting light onto the surface of the measurement object. The information acquisition step may include an external light source wavelength detection step for acquiring wavelength information of the light reflected from the surface of the measurement object in the external light source irradiation step. The external light source irradiation step and the external light source wavelength detection step may be performed before the white light emission step (S101) or before the white light emission step in the 3D inspection execution step (S 11 0), which is performed one or more times. As a result, the external light source irradiation step and the external light source wavelength detection step may be repeatedly performed multiple times.

While emitting light having a first wavelength in the external light source irradiation step, the focus adjustment step includes a step of changing the measurement section when the wavelength of the light detected in the external light source wavelength detection step is a second wavelength different from the first wavelength. The focus adjustment step may include a step of changing the measurement section so that the wavelength of the light focused at a position corresponding to the height on the surface of the measurement object does not include a wavelength between the first wavelength and the second wavelength. The focus adjustment step may be performed after the external light source wavelength detection step.

In the foregoing, the technical idea of the present disclosure has been described with reference to some embodiments and examples illustrated in the accompanying drawings. However, it should be understood that various substitutions, modifications, and alterations may be made without departing from the technical idea and scope of the present disclosure, as understood by those ordinarily skilled in the technical field to which the present disclosure pertains. In addition, such substitutions, modifications, and alterations should be considered as falling within the scope of the appended claims.

## Claims

1. A three-dimensional shape inspection device comprising:

a light emitter including a light source and a spatial light modulator configured to modulate light received from the light source, the light emitter being configured to emit multiple light beams having multiple focal points downward onto a surface of a measurement object;

an optical system configured to refract respective modulated light beams at different refractive indices for each of multiple wavelengths based on chromatic aberration, thereby forming a measurement section in a vertical direction in which the light refracted for each wavelength is focused; and

an image sensor configured to detect color information of light beams that are focused at and reflected from positions corresponding to heights on the surface of the measurement object among the light beams refracted for each of multiple wavelengths,

wherein the optical system comprises a focus adjuster configured to change the measurement section by vertically changing positions at which the light beams refracted for each of multiple wavelengths are focused.

2. The three-dimensional shape inspection device of claim 1, wherein the light emitter is configured to emit the multiple light beams having multiple focal points downward onto the surface of the measurement object in a horizontal direction perpendicular to the vertical direction.

3. The three-dimensional shape inspection device of claim 1, wherein the focus adjuster comprises a variable lens configured to refract each of the modulated light beams, and is configured to vertically change the measurement section by adjusting a curvature of the variable lens.

4. The three-dimensional shape inspection device of claim 3, wherein the variable lens comprises a liquid lens having a curvature that changes based on a current applied to the focus adjuster.

5. The three-dimensional shape inspection device of claim 1, wherein the focus adjuster is configured to select one measurement section among multiple measurement sections by vertically changing positions at which the light beams refracted for each of multiple wavelengths are focused.

6. The three-dimensional shape inspection device of claim 5, wherein one of the multiple measurement sections is different from another of the multiple measurement sections.

7. The three-dimensional shape inspection device of claim 1, wherein the spatial light modulator is configured to modulate light received from the light source by reflecting the light, and comprises multiple digital micromirror devices arranged in an array.

8. The three-dimensional shape inspection device of claim 1, wherein the image sensor is configured to detect color information of multiple light beams after the multiple light beams are focused on and reflected from the surface of the measurement object, and

wherein respective heights on the surface of the measurement object from which the multiple light beams are reflected are measured based on the color information of the multiple light beams detected by the image sensor.

9. The three-dimensional shape inspection device of claim 1, wherein the color information comprises RGB information of the light beams that are focused on and reflected from the surface of the measurement object.

10. The three-dimensional shape inspection device of claim 9, wherein the image sensor is configured to obtain wavelength information of the light beams that are focused on and reflected from the surface of the measurement object based on the RGB information.

11. The three-dimensional shape inspection device of claim 1, wherein the image sensor comprises any one of a color camera, a multispectral camera, and a monochrome camera with a band-pass filter.

12. The three-dimensional shape inspection device of claim 1, wherein the light source comprises any one of an LED, a halogen lamp, and a xenon lamp.

13. The three-dimensional shape inspection device of claim 1, further comprising:
a controller configured to measure a height of the surface of the measurement object based on the color information detected by the image sensor.

14. The three-dimensional shape inspection device of claim 1, further comprising:

an external light source configured to emit light onto the surface of the measurement object,
wherein the image sensor is configured to acquire wavelength information of light emitted from the external light source and reflected from the surface of the measurement object.

15. The three-dimensional shape inspection device of claim 14, further comprising:
a controller configured to control the focus adjuster to change the measurement section when the wavelength of light detected by the image sensor is a second wavelength different from a first wavelength, while the external light source emits light having the first wavelength.

16. The three-dimensional shape inspection device of claim 15, wherein the controller is configured to control the focus adjuster to change the measurement section so that the wavelengths of the light beams focused at the positions corresponding to the heights on the surface of the measurement object do not comprise a wavelength between the first wavelength and the second wavelength.

17. A three-dimensional shape inspection device comprising:

a light emitter configured to emit multiple light beams having multiple focal points downward onto a surface of a measurement object, the light emitter including a light source and a spatial light modulator configured to modulate light received from the light source;
an optical system configured to form a measurement section in a vertical direction, in which the light beams refracted for each of multiple wavelengths are focused, by refracting each of the modulated light beams at different refractive indices for each of multiple wavelengths based on chromatic aberration;
an image sensor configured to detect color information of light beams that are focused at and reflected from positions corresponding to heights on the surface of the measurement object among the light beams refracted for each of multiple wavelengths; and
a focus adjuster configured to change the measurement section by vertically moving the optical system to vertically change the positions at which the light beams refracted for each of multiple wavelengths are focused.

18. A method for inspecting a three-dimensional shape, the method comprising:

a light modulation step of modulating light received from a light source to emit multiple light beams having multiple focal points onto a surface of a measurement object;
a light emission step of refracting each of the modulated light beams at different refractive indices for each of multiple wavelengths based on chromatic aberration, thereby emitting the modulated light beams downward to form a measurement section in a vertical direction, in which the light beams refracted for each of multiple wavelengths are focused;
a focus adjustment step of changing the measurement section by vertically changing positions at which the light beams refracted for each of multiple wavelengths are focused;
an information acquisition step of detecting color information of the light beams that are focused at and reflected from positions corresponding to heights on the surface of the measurement object among the light beams refracted for each of multiple wavelengths in the measurement section; and
a height measurement step of measuring the height of the surface of the measurement object based on the detected color information.

19. The method of claim 18, wherein the focus adjustment step comprises selecting one measurement section among multiple measurement sections by vertically changing the positions at which the light beams refracted for each of multiple wavelengths are focused, and
wherein the information acquisition step and the height measurement step are performed based on the color information of the light beams that are focused at and reflected from positions corresponding to the heights on the surface of the measurement object among the light beams refracted for each of multiple wavelengths in the selected measurement section.

20. The method of claim 18, further comprising:

an external light source irradiation step of emitting light onto the surface of the measurement object,
wherein the information acquisition step comprises an external light source wavelength detection step of detecting wavelength information of light emitted from the external light source and reflected from the surface of the measurement object, and

wherein, when light having a first wavelength is emitted in the external light source irradiation step, the focus adjustment step comprises changing the measurement section when the wavelength of the light detected in the external light source wavelength detection step is a second wavelength different from the first wavelength.

# FIG. 1

# FIG. 2

# FIG. 3

$\lambda_l$

$Z_1$

$\lambda_m$

$\lambda_n$

# FIG. 4

# FIG. 5

# FIG. 6

# FIG. 7

CCD pixel

# FIG. 8

FIG. 9

# FIG. 10

EP 4 597 026 A1

FIG. 11

240

S1'

S1

FIG. 12

240

C

260(241)

## FIG. 13

## FIG. 14

# FIG. 15

FIG. 16

EP 4 597 026 A1

# FIG. 17

S10

```
        ┌─────────┐
        │  Start  │
        └─────────┘
             │
             ▼
S101 ┌─────────────────────┐      ┌─────────────────────┐
     │  Emitting white     │      │  Acquiring RGB      │ S106
     │  light              │      │  information        │
     └─────────────────────┘      └─────────────────────┘
             │                             │
             ▼                             ▼
S102 ┌─────────────────────┐      ┌─────────────────────┐
     │  Performing DLP     │      │  Converting         │ S107
     │  multiple pattern   │      │  coordinate system  │
     │  irradiation        │      └─────────────────────┘
     └─────────────────────┘              │
             │                             ▼
             ▼                     ┌─────────────────────┐
S103 ┌─────────────────────┐      │  Confirming         │ S108
     │  Performing         │      │  wavelength         │
     │  measurement        │      │  information        │
     │  object irradiation │      └─────────────────────┘
     └─────────────────────┘              │
             │                             ▼
             ▼                     ┌─────────────────────┐
S104 ┌─────────────────────┐      │  Confirming         │ S109
     │  Reflecting         │      │  measurement        │
     │  wavelength signal  │      │  object height      │
     │  corresponding      │      └─────────────────────┘
     │  measurement        │              │
     │  object height      │              ▼
     └─────────────────────┘      ┌─────────────────────┐
             │                     │  Performing 3D      │ S110
             ▼                     │  inspection         │
S105 ┌─────────────────────┐      └─────────────────────┘
     │  Acquiring image    │              │
     └─────────────────────┘              ▼
             │                        ┌─────────┐
             └──────────────────────→ │   End   │
                                      └─────────┘
```

## INTERNATIONAL SEARCH REPORT

| International application No. |
| --- |
| **PCT/KR2023/001243** |

**A. CLASSIFICATION OF SUBJECT MATTER**

**G01B 11/24**(2006.01)i; **G01B 11/06**(2006.01)i; **G01N 21/17**(2006.01)i; **G01N 21/64**(2006.01)i; **G02B 21/00**(2006.01)i

According to International Patent Classification (IPC) or to both national classification and IPC

**B. FIELDS SEARCHED**

Minimum documentation searched (classification system followed by classification symbols)

G01B 11/24(2006.01); G01N 21/88(2006.01); G01N 21/89(2006.01); G02B 21/00(2006.01); G02B 21/02(2006.01); G02F 1/13(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 공초점(confocal), 높이(height), 공간 광 변조기(spatial light modulator), 초점(focal point)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2015-504178 A (TAYLOR HOBSON LIMITED) 05 February 2015 (2015-02-05) See paragraphs [0016]-[0035] and figures 1-3. | 1-15,17-20 |
| A | | 16 |
| Y | US 2018-0164562 A1 (BYEON et al.) 14 June 2018 (2018-06-14) See abstract, paragraphs [0039]-[0066] and figures 5-12. | 1-15,17-20 |
| Y | JP 2007-187945 A (YOKOGAWA ELECTRIC CORP.) 26 July 2007 (2007-07-26) See paragraphs [0031]-[0041] and figure 1. | 14,15,20 |
| A | KR 10-2005-0102323 A (NARAENANOTECH CORPORATION) 26 October 2005 (2005-10-26) See paragraphs [0015]-[0056] and figure 2. | 1-20 |
| A | KR 10-2018-0014435 A (KLA-TENCOR CORPORATION) 08 February 2018 (2018-02-08) See claims 1 and 2 and figures 1a and 1b. | 1-20 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **15 June 2023** | **16 June 2023** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# EP 4 597 026 A1

| Patent document cited in search report | | | Publication date (day/month/year) | Patent family member(s) | | | Publication date (day/month/year) |
|---|---|---|---|---|---|---|---|
| JP | 2015-504178 | A | 05 February 2015 | EP | 2795246 | A2 | 29 October 2014 |
| | | | | GB | 2497792 | A | 26 June 2013 |
| | | | | US | 2014-0347660 | A1 | 27 November 2014 |
| | | | | WO | 2013-093459 | A2 | 27 June 2013 |
| | | | | WO | 2013-093459 | A3 | 09 January 2014 |
| US | 2018-0164562 | A1 | 14 June 2018 | None | | | |
| JP | 2007-187945 | A | 26 July 2007 | JP | 4867354 | B2 | 01 February 2012 |
| KR | 10-2005-0102323 | A | 26 October 2005 | None | | | |
| KR | 10-2018-0014435 | A | 08 February 2018 | CN | 107683400 | A | 09 February 2018 |
| | | | | CN | 107683400 | B | 26 January 2021 |
| | | | | EP | 3314241 | A1 | 02 May 2018 |
| | | | | JP | 2018-519524 | A | 19 July 2018 |
| | | | | JP | 6882209 | B2 | 02 June 2021 |
| | | | | TW | 201710668 | A | 16 March 2017 |
| | | | | TW | I721993 | B | 21 March 2021 |
| | | | | US | 10495446 | B2 | 03 December 2019 |
| | | | | US | 2016-0377412 | A1 | 29 December 2016 |
| | | | | WO | 2017-004089 | A1 | 05 January 2017 |

**INTERNATIONAL SEARCH REPORT**
Information on patent family members

International application No.

**PCT/KR2023/001243**

Form PCT/ISA/210 (patent family annex) (July 2022)